# EUROPÄISCHE PATENTSCHRIFT

(11) **EP 1 339 007 B1**
(45) Veröffentlichungstag und Bekanntmachung des Hinweises auf die Patenterteilung: **20.04.2005**
(21) Anmeldenummer: 03001666.1
(22) Anmeldetag: 24.01.2003
(51) Int. Cl.: G06K 7/10

(54) **Optoelektronischer Codeleser**
Optoelectronic code reader
Lecteur optoélectronique des codes

(30) Priorität: 22.02.2002 DE 10207538
(43) Veröffentlichungstag der Anmeldung: 27.08.2003
(73) Patentinhaber: Sick AG, 79183 Waldkirch, Breisgau (DE)
(72) Erfinder: Uhl, Hubert, 79183 Waldkirch (DE); Wehrle, Klemens, 79183 Waldkirch (DE)
(74) Vertreter: Manitz, Finsterwald & Partner GbR

(56) Entgegenhaltungen:
- EP-A- 0 851 376
- US-A- 5 448 078
- US-A- 5 869 827

## Beschreibung

Die Erfindung betrifft einen optoelektronischen Codeleser und ein Verfahren zum Einlesen von Codes, die sich innerhalb eines Lesebereichs relativ zu dem Codeleser bewegen, wobei der Lesebereich zumindest entlang einer Abtastrichtung abgetastet wird.

Ein derartiges Einlesen von Codes erfolgt bei einem Barcodescanner beispielsweise dadurch, dass ein Laserstrahl mittels eines rotierenden Polygonspiegels periodisch entlang der Abtastrichtung über den Lesebereich geführt wird, wobei das reflektierte Licht einem Lichtempfänger zugeführt wird. Je nachdem, ob der Laserstrahl an einer hellen oder einer dunklen Fläche reflektiert wird, trifft eine unterschiedliche starke Lichtmenge auf den Empfänger. Die entsprechenden Ausgangssignale des Empfängers werden mittels einer Auswerteeinrichtung bezüglich des Vorhandenseins und ggf. des Inhalts eines Barcodes ausgewertet.

Optische Codes können beispielsweise auch mittels einer Zeilenkamera eingelesen werden, die mittels mehrerer, zeilenförmig angeordneter Lichtempfangselemente eine der Abtastrichtung entsprechende zeilenförmige Bildinformation gleichzeitig abzutasten vermag, um diese anschließend auf das Vorhandensein eines Codes auszuwerten.

Das Abtasten des Lesebereichs zumindest entlang der Abtastrichtung ist bei derartigen Codelesern erforderlich, da bei den üblichen Codes die einzulesende Information entlang einer Informationsanordnungsrichtung verschlüsselt ist. So besteht beispielsweise ein Barcode aus hellen und dunklen Balken, die entlang der Informationsanordnungsrichtung nebeneinander angeordnet sind. Nur wenn die Abtastrichtung mit der Informationsanordnungsrichtung übereinstimmt oder relativ zu dieser höchstens einen gewissen Abtastgrenzwinkel einnimmt, kann der Code korrekt eingelesen werden.

Dieser Art von Codelesern ist gemeinsam, dass sie einen begrenzten Fokusbereich, also eine limitierte Schärfentiefe besitzen. Dies kann zu Problemen führen, falls mehrere Codes nacheinander eingelesen werden sollen, die an Objekten - beispielsweise Postpaketen -unterschiedlicher Höhe angeordnet sind und somit unterschiedliche Abstände zu dem Codeleser einnehmen. In diesem Fall können nur dann alle Codes korrekt eingelesen werden, falls zwischen dem Abtasten der verschiedenen Codes eine Anpassung der Fokuslage des Codelesers erfolgt.

Jedoch ist auch diese Abhilfe problematisch, und zwar insbesondere dann, wenn die verschiedenen Codes entlang einer Förderrichtung durch den Lesebereich des Codelesers bewegt werden und dabei entlang einer Abtastrichtung abgetastet werden sollen, die senkrecht oder diagonal zu der Förderrichtung verläuft. In diesem Fall kann die Situation auftreten, dass entlang der Abtastrichtung zwei Codes im Lesebereich des Codelesers angeordnet sind, die einen unterschiedlichen Abstand zu dem Codeleser einnehmen.

Falls in dieser Situation während des Abtastens entlang der Abtastrichtung die Fokuslage geändert wird, um beide Codes korrekt einlesen zu können, kann die Bewegung der Codes entlang der Förderrichtung zwischenzeitlich allenfalls mit stark verminderter Geschwindigkeit erfolgen. Das Ändern der Fokuslage benötigt nämlich eine gewisse Zeitdauer, so dass auch das Abtasten entlang der Abtastrichtung eine entsprechende Mindestdauer erfordert. Falls jedoch die Codes während des Abtastens zu schnell in Förderrichtung bewegt werden, hat der als letztes einzulesende Code die Abtastlinie möglicherweise bereits verlassen, bevor der gesamte Abtastvorgang entlang der Abtastlinie abgeschlossen ist.

Die US-A-5,448,078, gegen die die Ansprüche abgegrezt sind, beschreibt das Einlesen von Barcodes mittels zweier Leseeinheiten, denen ein Höhendetektor vorgeschaltet ist. Bei einer Ausführungsform wird versucht, mit beiden Leseeinheiten jeweils jeden Code zu lesen, wobei eine Steuereinheit die Fokuslage der beiden Leseeinheiten in Abhängigkeit von dem Signal des Höhendetektors steuert. Bei einer weiteren Ausführungsform wird in Abhängigkeit von der Richtung der detektierten Änderung der Objekthöhe eine der beiden Leseeinheiten ausgewählt, die letztlich beide Codes lesen soll. Bei einer anderen Ausführungsform werden die Fokuslagen der beiden Leseeinheiten auf unterschiedlich hohe Objekte eingestellt.

Es ist daher eine Aufgabe der Erfindung, einen Codeleser und ein Einleseverfahren zu schaffen, die auf einfach zu verwirklichende Weise das Einlesen von in den Lesebereich geführten Codes auch bei Vorliegen einer potentiell problematischen Leseaufgabe ermöglichen.

Diese Aufgabe wird durch die Merkmale der unabhängigen Ansprüche gelöst.

Bei der Erfindung werden also für die Abtastrichtung des Codelesers mehrere Abtasteinrichtungen bereitgestellt, wobei diese Abtasteinrichtungen - bedarfsweise - auf unterschiedliche Fokuslagen eingestellt werden, um mehrere Codes einlesen zu können, die relativ zueinander entlang der Abtastrichtung des Codelesers angeordnet sind und dabei unterschiedliche Abstände zu dem Codeleser einnehmen. Somit wird bei der Erfindung durch mehrfaches Abtasten entlang der Abtastrichtung des Codelesers bewusst eine gewisse Redundanz geschaffen, so dass für den Fall, dass mehrere Codes in den Lesebereich des Codelesers geraten, eine ausreichende Anzahl von Abtasteinrichtungen und somit eine ausreichende Anzahl von möglichen unterschiedlichen Fokuslagen für dieselbe Abtastrichtung zur Verfügung steht.

Falls sich also mehrere Objekte derart durch den Lesebereich des Codelesers bewegen, dass sie - bezüglich der Abtastrichtung des Codelesers - benachbart zueinander angeordnet sind und dabei einen unterschiedlichen Abstand zu dem Codeleser einnehmen, so stehen mehrere Abtasteinrichtungen zur Verfügung, die ihre Fokuslage unterschiedlich, und zwar jeweils für einen der Codes einstellen können. Somit wird vermieden, dass entlang der Abtastrichtung des Codelesers lediglich die Codes einer einzigen Fokuslage eingelesen werden können oder dass lediglich eine sehr langsame Relativbewegung zwischen dem Codeleser und den Codes möglich ist, um entlang der Abtastrichtung die Fokuslage ändern zu können.

Gemäß einer bevorzugten Ausführungsform erfolgt das Einlesen der in den Lesebereich eingeführten Codes - zumindest zeitweise - in kooperativer Abstimmung zwischen den Abtasteinrichtungen, und zwar indem die Fokuslagen der Abtasteinrichtungen abwechselnd auf den jeweils nächsten in den Lesebereich eingeführten Code eingestellt werden. Mit anderen Worten übernimmt jede Abtasteinrichtung das Einlesen eines bestimmten Codes im Lesebereich des Codelesers, um nach Beendigung eines derartigen Einlesevorganges den nächsten Code zu erfassen, der in den Lesebereich eingeführt und zwischenzeitlich noch nicht von einer anderen Abtasteinrichtung erfasst worden ist. Dadurch steht für das Einlesen jedes Codes ausreichend Zeit zur Verfügung, um die Fokuslage der betreffenden Abtasteinrichtung auf den jeweiligen Code einstellen zu können, ohne dass unerwünschte Beschränkungen der Geschwindigkeit in Kauf genommen werden müssen, mit der die Codes durch den Lesebereich geführt werden.

Eine derartige kooperative Fokussierung.der Abtasteinrichtung ist demnach insbesondere dann von Vorteil, wenn sich mehrere Codes im Lesebereich befinden und deshalb die Gefahr besteht, dass aufgrund einer Anordnung unterschiedlich beabstandeter Codes entlang der Abtastrichtung auf einen dieser Codes nicht hinreichend schnell fokussiert werden kann.

Die Steuerung der Fokussierung der Abtasteinrichtungen erfolgt vorzugsweise in Abhängigkeit von der Anzahl der Codes im Lesebereich des Codelesers. Alternativ oder zusätzlich erfolgt die Steuerung in Abhängigkeit von dem gegenseitigen Abstand der in den Lesebereich geführten Codes. Ferner können die Fokuslagen in Abhängigkeit von der gegenseitigen Relativlage der Codes bezüglich der Abtastrichtung des Codelesers gesteuert werden, um eine individuelle Fokussierung der Abtasteinrichtungen beispielsweise dann vorzusehen, wenn zwei Codes in Abtastrichtung benachbart zueinander angeordnet sind. Eine derartige Steuerung ermöglicht es, eine individuelle Fokussierung der redundant angeordneten Abtasteinrichtungen in unterschiedliche Fokuslagen genau dann vorzunehmen, wenn vorbestimmte Erkennungskriterien erfüllt sind, die die Gefahr des Vorliegens unterschiedlich beabstandeter Codes in einer Anordnung entlang der Abtastrichtung erkennen lassen.

Erfindungsgemäß werden die Abtasteinrichtungen derart gesteuert, dass wahlweise die erläuterte kooperative Fokussierung auf verschiedene Codes erfolgt oder - insbesondere bei großem gegenseitigen Abstand der Codes - eine Standardfokussierung erfolgt, bei der alle Abtasteinrichtungen eine gemeinsame, für die aktuelle Leseaufgabe optimale Fokuslage einnehmen. Insbesondere kann von der kooperativen Fokussierung auf die Standardfokussierung umgeschaltet werden, wenn die erläuterten Erkennungskriterien zur Identifizierung einer potentiell problematischen Leseaufgabe nicht erfüllt sind, oder wenn der letzte im Lesebereich befindliche Code gemäß der kooperativen Fokussierung der Abtasteinrichtungen erfolgreich eingelesen worden ist.

Ein derartiges Umschalten auf die Standardfokussierung der Abtasteinrichtungen auf eine gemeinsame Fokuslage hat den Vorteil, dass die mehreren Abtasteinrichtungen zur Erzeugung einer Redundanz hinsichtlich der eingelesenen Information ausgenutzt werden können, da beispielsweise ein einziger Code durch mehrere Abtasteinrichtungen eingelesen werden kann und die dabei jeweils gewonnenen Codeinformationen zu Kontrollzwecken miteinander verglichen werden können.

Es ist bevorzugt, wenn der Codeleser - als einen Masterscanner - einen Bilderfassungssensor aufweist, durch den die erläuterten Erkennungskriterien für eine potentiell schwierige Leseaufgabe ermittelt werden können. Demnach kann ein derartiger Bilderfassungssensor zur Erfassung der Anzahl der im Lesebereich befindlichen Codes, zur Erfassung des gegenseitigen Abstands der Codes im Lesebereich, und/oder zur Erfassung der Relativanordnung der Codes bezüglich der Abtastrichtung des Codelesers eingesetzt werden, um diese Informationen an eine Steuereinrichtung für die Abtasteinrichtungen weiterzuleiten. Für diese Zwecke ist es ausreichend, wenn der Bilderfassungssensor den Lesebereich oder einen vorgelagerten Erfassungsbereich zweidimensional erfasst. Die Relativanordnung der Codes kann direkt ermittelt oder aus der erfassten Objektanordnung abgeleitet werden.

Alternativ hierzu kann ein einfacher optoelektronischer oder sonstiger Objekterfassungssensor vorgesehen sein, um das Eindringen oder Vorhandensein von Objekten in dem Lesebereich zu detektieren und den Lesevorgang entsprechend zu steuern. Beispielsweise kann an einem Förderband eine Lichtschranke oder ein Lichttaster angeordnet sein, um das Passieren von Fördergut zu detektieren, an dem die einzulesenden Codes dann vermutet werden. Anhand der vom Sensor gelieferten Information über die Lage eines Objekts und aufgrund einer Verfolgung der Objektbewegung - beispielsweise durch Inkrementalgeber an einem Förderband - kann somit auf die Position eines einzulesenden Codes geschlossen werden. Dadurch ist eine Steuerung zur kooperativen Fokussierung auch ohne Einsatz des genannten Bilderfassungssensors möglich.

Ferner ist es bevorzugt, wenn der Codeleser wenigstens eine Abstandsmesseinrichtung aufweist, mittels derer der Abstand zwischen den in den Lesebereich geführten Codes und dem Codeleser bestimmt werden kann. Diese Abstandsinformation wird zur Steuerung und ggf. zur individuellen Fokussierung der Abtasteinrichtungen verwendet. Jeder Abtasteinrichtung kann auch eine eigene Abstandsmesseinrichtung zugeordnet sein.

Ein weiteres Problem bei bekannten Codelesern besteht in einer geometrischen Abschattung des Abtaststrahls des betreffenden Codelesers durch ein im Lesebereich befindliches Objekt, so dass ein im Abtastschatten dieses Objekts angeordneter Code nicht korrekt eingelesen werden kann. Ferner besteht bei bekannten Codelesern das Problem, dass bei Codes unter Klarsichtfolie Totalreflexionen an der Folie auftreten und ein korrektes Einlesen der Codeinformation verhindern können.

Diese Probleme werden bei einer weiteren bevorzugten Weiterbildung der Erfindung vermieden, bei der die Abtaststrahlengänge geneigt zueinander verlaufen. Aufgrund des Vorhandenseins mehrerer Abtasteinrichtungen für dieselbe Abtastrichtung kann der Lesebereich des Codelesers mit Abtaststrahlen in unterschiedlichen Neigungswinkeln erfasst werden, so dass die Neigungen derart gewählt werden können, dass es für die Abtasteinrichtungen keine gemeinsamen Abschattungsbereiche gibt und auch Totalreflexionen oder weitere Reflexionseffekte vermieden werden. Diese Weiterbildung ist also dann von besonderem Vorteil, wenn die Codeinformationen redundant eingelesen werden, also wenn die Abtasteinrichtungen gemäß der erläuterten Standardfokussierung auf eine gemeinsame Fokuslage eingestellt sind.

Für die Vermeidung von geometrischen Abschattungen oder von Reflexionseffekten ist es insbesondere ausreichend, wenn der jeweilige Abtaststrahlengang der Abtasteinrichtungen einen geringfügigen Neigungswinkel (Skew-Winkel) bezüglich der Orthogonalen zu der Lesefläche einnimmt, also bezüglich der Orthogonalen zu derjenigen Richtung, die senkrecht zu der Richtung der Relativbewegung von Codeleser und Codes einerseits und zu der Erstreckungsrichtung der Codes andererseits steht. Dieser Neigungswinkel kann beispielsweise zwischen 2° und 20°, insbesondere ca. 10° betragen.

Alternativ oder zusätzlich kann eine geneigte Anordnung der Abtasteinrichtungen relativ zueinander bezüglich der Richtung der Relativbewegung von Codeleser und Codes vorgesehen sein, so dass also beispielsweise die erste Abstasteinrichtung schräg in Bewegungsrichtung der Codes und die zweite Abasteinrichtung schräg entgegen der Bewegungsrichtung der Codes geneigt ist.

Hinsichtlich der baulichen Verwirklichung der ersten und zweiten Abtasteinrichtung ist es möglich, dass diese - zumindest teilweise - durch separate Einheiten gebildet sind. Die Abtasteinrichtungen können also jeweils einen eigenen Lichtsender, eine eigene Sendeoptik, eine eigene Empfangsoptik, einen eigenen Lichtempfänger und/oder eine eigene Auswerteeinrichtung besitzen.

Alternativ hierzu kann die Erfindung auch dadurch verwirklicht werden, dass die erste Abtasteinrichtung und die zweite Abtasteinrichtung - zumindest teilweise - durch eine gemeinsame Abtasteinheit gebildet sind. In diesem Fall sind für die Abtasteinrichtungen also ein gemeinsamer Lichtsender, eine gemeinsame Sendeoptik, eine gemeinsame Empfangsoptik, ein gemeinsamer Lichtempfänger und/oder eine gemeinsame Auswerteeinrichtung vorgesehen.

Hinsichtlich des Abtastens des Lesebereichs sowohl durch die erste als auch durch die zweite Abtasteinrichtung entlang der gemeinsamen Abtastrichtung ist es bevorzugt, wenn das Abtasten entlang von Abtastlinien erfolgt, die jeweils einer Abtastrichtung zugeordnet sind und im Lesebereich parallel benachbart zueinander verlaufen. In diesem Fall können die Abtastlinien der verschiedenen Abtasteinrichtungen also derart gewählt werden, dass sie jeweils parallel zu der gemeinsamen Abtastrichtung verlaufen und dabei ausreichend weit voneinander beabstandet sind, um zu gewährleisten, dass die Abtasteinrichtungen bzw. die zugeordneten Abtaststrahlen keine gegenseitige Störung der Einlesevorgänge verursachen.

Alternativ hierzu ist es möglich, dass die Abtastlinien der mehreren Abtasteinrichtungen entlang des Lesebereichs des Codelesers zusammenfallen. Dies ist insbesondere möglich, wenn die betreffenden Abtasteinrichtungen - zumindest teilweise - durch eine gemeinsame Abtasteinheit gebildet sind.

Die Erfindung und die hiermit verbundenen Vorteile lassen sich außerdem selbst dann verwirklichen, wenn das Abtasten des Lesebereichs durch die erste und zweite Abtasteinrichtung nicht genau parallel zu der genannten Abtastrichtung des Codelesers erfolgt, sondern wenn die jeweiligen Abtastlinien in einem spitzen Winkel schräg zueinander verlaufen oder sich in einem spitzen Winkel schneiden. Ausschlaggebend ist nämlich, dass durch beide Abtasteinrichtungen noch ein Code eingelesen werden können muss, dessen Informationsanordnungsrichtung parallel zu der Abtastrichtung des Codelesers verläuft. Dies ist für einen Barcode jedoch beispielsweise auch dann noch gewährleistet, wenn er entlang von Abtastlinien abgetastet wird, die in einem Abtastgrenzwinkel von +/- 30° zu der Ausrichtung bzw. der Informationsanordnungsrichtung des Codes verlaufen.

Gemäß einer weiteren bevorzugten Ausführungsform ist der Codeleser zusätzlich zum Abtasten des Lesebereichs entlang einer weiteren Abtastrichtung ausgebildet. Das Abtasten des Lesebereichs entlang der Abtastrichtung und der weiteren, diesbezüglich diagonal verlaufenden Abtastrichtung ermöglicht nämlich das Einlesen von Codes in beliebiger Winkellage ihrer Informationsanordnungsrichtung (omnidirektionale Lesemöglichkeit). Vorzugsweise ist der Codeleser auch hinsichtlich dieser weiteren Abtastrichtung zum Abtasten des Lesebereichs in unterschiedlichen Fokuslagen steuerbar, um auch bezüglich dieser weiteren Abtastrichtung mehrere Codes in unterschiedlichen Abständen problemlos und schnell einlesen zu können.

Schließlich ist anzumerken, dass die Erfindung für das Einlesen von eindimensionalen oder zweidimensionalen Codes geeignet und demzufolge beispielsweise für Barcodescanner, Zeilenkameras oder Matrixkameras einsetzbar ist. Außerdem ist es möglich, anstelle von zwei Abtasteinrichtungen in redundanter Anordnung drei oder mehr Abtasteinrichtungen zum Abtasten entlang einer gemeinsamen Abtasteinrichtung in unterschiedlichen Fokuslagen vorzusehen.

Weitere Ausführungsformen der Erfindung sind in den Unteransprüchen genannt. Die Erfindung wird nachfolgend beispielhaft unter Bezugnahme auf die Zeichnungen erläutert; in diesen zeigen:
- Fig. 1a und 1b: einen erfindungsgemäßen Codeleser und die entsprechende Lesesituation in einer Perspektivansicht bzw. einer Draufsicht,
- Fig. 2a und 2b: eine weitere Ausführungsform eines erfindungsgemäßen Codelesers und der entsprechenden Lesesituation in einer Perspektivansicht bzw. einer Draufsicht,
- Fig. 3a und 3b: einen bekannten Codeleser und die entsprechende Lesesituation in einer Perspektivansicht bzw. einer Draufsicht, und
- Fig. 4a und 4b: einen bekannten Codeleser und die entsprechende Lesesituation in einer Perspektivansicht bzw. einer Draufsicht.

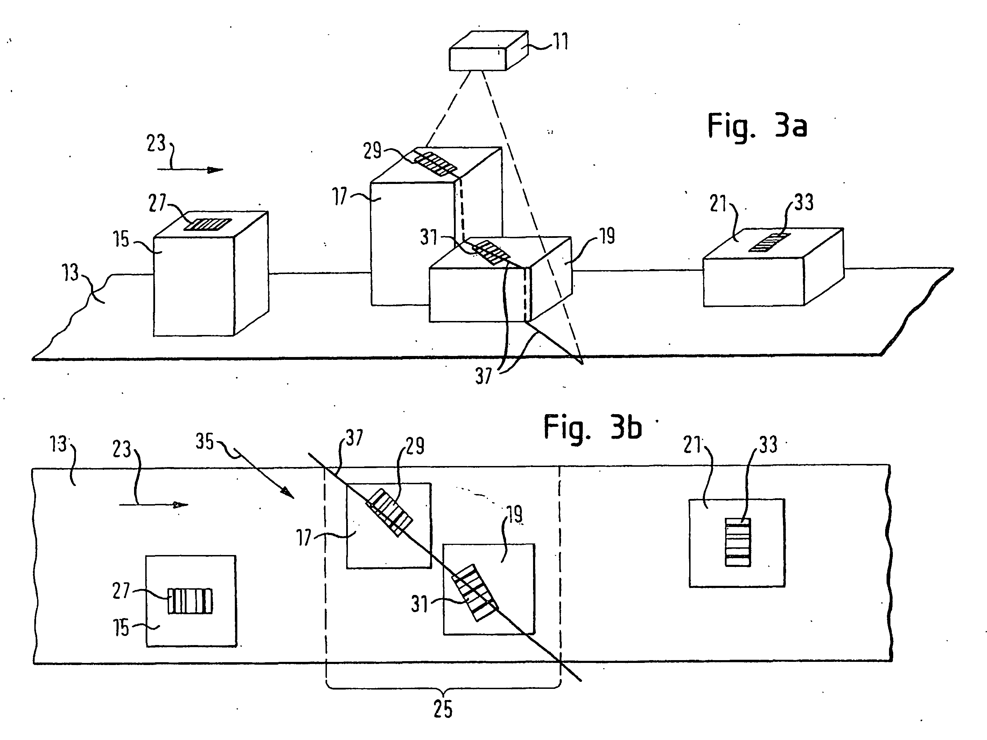

Fig. 3a und 3b zeigen einen herkömmlichen Barcodescanner 11 und eine typische Lesesituation. Mittels eines Förderbands 13 werden mehrere Pakete 15, 17, 19, 21 entlang einer Förderrichtung 23 durch einen Lesebereich 25 des Barcodescanners 11 bewegt. Jedes Paket 15, 17, 19, 21 ist mit einem eindimensionalen Code 27, 29, 31 bzw. 33 versehen.

Der Barcodescanner 11 tastet den Lesebereich 25 ab, indem ein - am Lesebereich 25 an sich punktförmig erscheinender - Laserstrahl über das Förderband 13 geführt wird. Indem dieser Abtaststrahl mit einer hohen Abtastrate entlang einer Abtastrichtung 35 periodisch über den Lesebereich 25 geführt wird, erfolgt die Abtastung letztlich entlang einer Abtastlinie 37, die in der Draufsicht gemäß Fig. 3b - in idealisierter Darstellung - durchgehend geradlinig erscheint. Sobald ein Code 29, 31 entlang dieser Abtastlinie 37 und somit entlang der Abtastrichtung 35 erfasst wird, kann der Barcodescanner 11 anhand der von dem Code 29, 31 verursachten Kontrastverhältnisse des reflektierten Lichts die darin verschlüsselte Information einlesen und auswerten.

Ein Problem bei dem in Fig. 3a und 3b gezeigten Barcodescanner 11 besteht jedoch darin, dass er lediglich eine begrenzte Schärfentiefe besitzt und daher nicht ohne zwischenzeitliche Verstellung seiner Fokuslage die Codes 29 und 31 einlesen kann, die an Paketen 17 bzw. 19 in unterschiedlicher Höhe angeordnet sind und entlang der Abtastrichtung 35 somit unterschiedliche Abstände zu den Barcodescanner 11 einnehmen. Eine zwischenzeitliche Änderung der Fokuslage des Barcodescanners 11, während der Abtaststrahl in Abtastrichtung 35 entlang der Abtastlinie 37 geführt wird, nimmt jedoch eine vergleichsweise lange Zeitdauer in Anspruch, so dass der Abtaststrahl nur langsam entlang der Abtastrichtung 35 geführt werden kann. Dementsprechend kann das Förderband 13 nur langsam in Förderrichtung 23 bewegt werden, um zwischen aufeinanderfolgenden Abtastvorgängen nicht dazwischenliegende Codes zu übergehen. Falls allerdings die Fokuslage des Barcodescanners 11 nicht angepasst wird, können die Codes 29 und 31 nicht beide korrekt eingelesen werden.

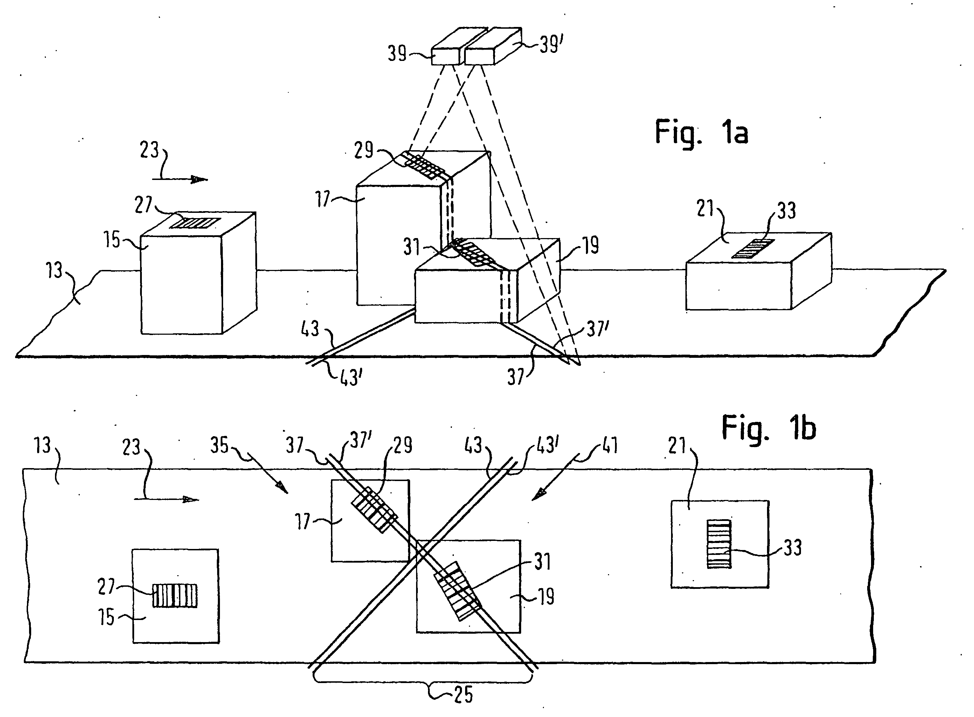

Fig. 1a und 1b zeigen eine erfindungsgemäße Lösung dieses Problems, die der besonderen in Fig. 3a, 3b und 1a, 1b gezeigten Situation Rechnung trägt, in der mehrere Codes 29, 31 bezüglich der Abtastrichtung 35 des Codelesers benachbart zueinander angeordnet sind und dabei einen unterschiedlich großen Abstand zu dem Codeleser einnehmen.

Hier sind zum Abtasten des Lesebereichs 25 eine erste Abtasteinrichtung 39 und eine zweite Abtasteinrichtung 39' vorgesehen. Diese sind beispielsweise nach der Art eines Barcodescanners aufgebaut, so dass sie den Lesebereich 25 jeweils mittels eines periodisch entlang der Abtastrichtung 35 abgelenkten Laserstrahls abtasten. Dementsprechend erfolgt dieses Abtasten des Lesebereichs 35 gemäß Fig. 1b entlang einer ersten Abtastlinie 37 und einer zweiten Abtastlinie 37'. Die Abtastlinien 37 und 37' verlaufen in Abtastrichtung 35 und somit parallel zueinander, und sie sind - entsprechend einer zueinander versetzten Anordnung der Abtasteinrichtungen 39, 39' - bezüglich der Förderrichtung 23 geringfügig voneinander beabstandet.

Erfindungsgemäß können die Abtasteinrichtungen 39, 39' - zumindest bedarfsweise - derart gesteuert werden, dass sie unterschiedliche Fokuslagen einnehmen. Dadurch vermag der Codeleser gemäß Fig. 1a und 1b, Codes, die entlang der Abtastrichtung 35 angeordnet sind und dabei unterschiedliche Abstände zu den Codeleser besitzen, in jeweils angepasster Fokuslage einzulesen. Insbesondere können mittels der beiden Abtasteinrichtungen 39, 39' die beiden Codes 29 und 31 korrekt eingelesen werden, obwohl diese auf Paketen 17 bzw. 19 unterschiedlicher Höhe angeordnet sind. Zu diesem Zweck wird beispielsweise die erste Abtasteinrichtung 39 auf den Code 29 und die zweite Abtasteinrichtung 39' auf den Code 31 fokussiert.

Somit ist während des Abtastens des Lesebereichs 25 entlang der Abtastlinie 37 oder 37' keine zwischenzeitliche Änderung der Fokuslage der betreffenden Abtasteinrichtung 39 bzw. 39' erforderlich. Demzufolge kann das Abtasten entlang der Abtastlinie 37 oder 37' mit einer hohen Wiederholungsrate erfolgen, so dass auch eine kontinuierliche Bewegung des Förderbands 13 entlang der Förderrichtung 23 mit einer vergleichsweise hohen Geschwindigkeit möglich ist, ohne dass die Gefahr besteht, dass unmittelbar benachbarte Codes von zwei aufeinanderfolgenden Abtastvorgängen nicht erfasst und somit übersehen werden.

Die Steuerung der Abtasteinrichtungen 39, 39' erfolgt vorzugsweise mittels einer - in Fig. 1a und 1b nicht gezeigten - Steuereinrichtung, die mit einem - ebenfalls nicht gezeigten - Bilderfassungssensor verbunden ist. Dieser bestimmt die Anzahl der gegenwärtig im Lesebereich 25 vorhandenen Codes 29, 31. Falls eine vorbestimmte Mindestanzahl von Codes 29, 31, beispielsweise mindestens zwei Codes, detektiert wird, so veranlasst die Steuereinrichtung die Abtasteinrichtungen 39, 39' zu einer kooperativen Fokussierung. Dies bedeutet, dass jede der Abtasteinrichtungen 39, 39' jeweils auf einen Code 29, 31 fokussiert und nach erfolgreichem Einlesen des betreffenden Codes 29, 31 ihre Fokuslage auf den jeweils nächsten "freien", d.h. von der anderen Abtasteinrichtung 39' bzw. 39 noch nicht erfassten Code 27 einstellt.

Falls dagegen die Signale des Bilderfassungssensors ergeben, dass das vorgenannte Erkennungskriterium für das Vorliegen einer potentiell problematischen Lesesituation nicht erfüllt ist, so veranlasst die Steuereinrichtung die beiden Abtasteinrichtungen 39, 39' zu einer Standardfokussierung. Dies bedeutet, dass die Abtasteinrichtungen 39, 39' eine gemeinsame Fokuslage für den gerade im Lesebereich 25 befindlichen Code einstellen.

Anstelle des genannten Bilderfassungssensors kann auch ein einfacher Objekterfassungssensor vorgesehen sein, also ein Sensor zur Detektion von Objekten ohne Erfassung einer aufgelösten Bildinformation.

Fig. 1a und 1b zeigen ferner, dass die Abtastrichtung 35 der Abtasteinrichtungen 39, 39' bezüglich der Förderrichtung 23 diagonal verläuft.

Darüber hinaus zeigen Fig. 1a und 1b eine Weiterbildung der Erfindung, bei der die Abtasteinrichtungen 39, 39' zusätzlich zum Abtasten des Lesebereichs 25 entlang einer weiteren Abtastrichtung 41 ausgebildet sind. Zu diesem Zweck wird der jeweilige Abtaststrahl der Abtasteinrichtungen 39, 39' abwechselnd entlang der Abtastrichtung 35 und entlang der weiteren Abtastrichtung 41 abgelenkt, so dass zusätzlich eine Abtastung des Lesebereichs 25 entlang von weiteren Abtastlinien 43 bzw. 43' erfolgt. Die Abtastlinie 37 und die weitere Abtastlinie 43 der ersten'Abtasteinrichtung 39, sowie die Abtastlinie 37' und die weitere Abtastlinie 43' der zweiten Abtasteinrichtung 39' verlaufen in der Draufsicht gemäß Fig. 1b senkrecht zueinander und erscheinen demnach jeweils X-förmig.

Dieses Abtasten des Lesebereichs 25 entlang der Abtastrichtung 35 und der weiteren Abtastrichtung 41 bewirkt, dass die Codes 27, 29, 31, 33 grundsätzlich in jeder Drehlage gelesen werden können, da stets entweder die Abtastrichtung 35 oder die weitere Abtastrichtung 41 hinreichend mit der Inforamtionsanordnungsrichtung des betreffenden Codes übereinstimmt. Mit anderen Worten wird der betreffende Code stets entweder von den Abtastlinien 37, 37' oder von den weiteren Abtastlinien 43, 43' vollständig erfasst.

Zu dieser Ausführungsform ist noch anzumerken, dass das Abtasten entlang der weiteren Abtastrichtung 41 anstelle durch die Abtasteinrichtungen 39, 39' selbstverständlich auch durch zusätzliche separate Abtasteinrichtungen erfolgen kann.

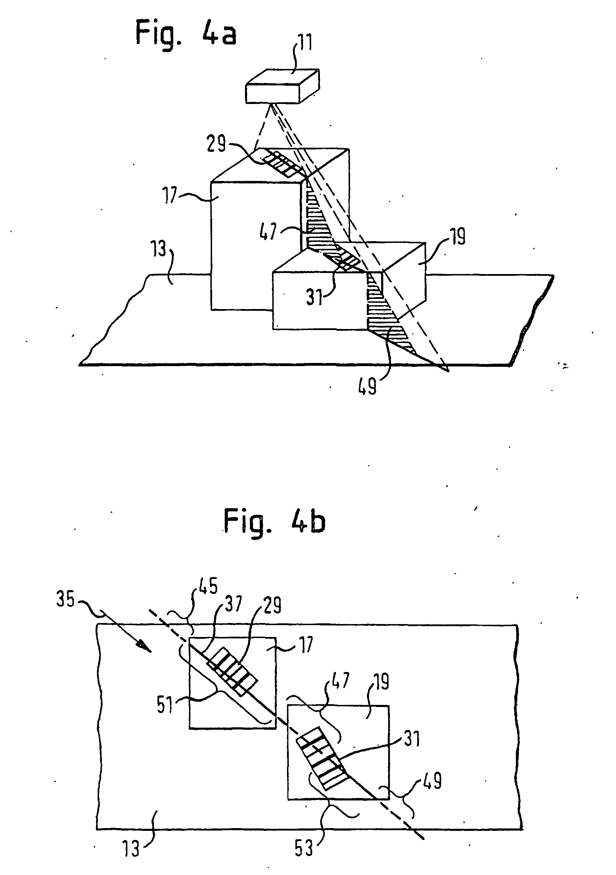

Fig. 4a und 4b zeigen eine weitere Problematik, die bei bekannten Codelesern auftreten kann. Gezeigt ist in Fig. 4a ein Barcodescanner 11, der in einem vergleichsweise geringen Abstand oberhalb eines Pakets 17 angeordnet ist, an dessen Oberseite ein einzulesender Code 29 angeordnet ist. Auch hier erfolgt ein Abtasten entlang einer Abtastrichtung 35, so dass die Führung des Abtaststrahls in der Draufsicht gemäß Fig. 4b als eine Abtastlinie 37 erscheint.

Allerdings kommt es aufgrund des endlichen Abstands des Barcodescanners 11 zu dem darunter befindlichen Förderband 13, und insbesondere aufgrund des vergleichsweise geringen Abstands zu der Oberseite des Pakets 17 zu geometrischen Abschattungseffekten. Insbesondere werden durch die Oberseite des Pakets 17 zwei Bereiche 45, 47 und durch die Oberseite des Pakets 19 ein Bereich 49 der Abtastlinie 37 abgeschattet, so dass entlang der Abtastlinie 37 in diesem Fall ein Einlesen von Codes nur noch entlang zweier effektiver Leseabschnitte 51, 53 möglich ist. Dies hat in dem gezeigten Beispiel zur Folge, dass der Code 31 auf dem Paket 19 aufgrund der Abschattung nicht vollständig und somit nicht korrekt eingelesen werden kann.

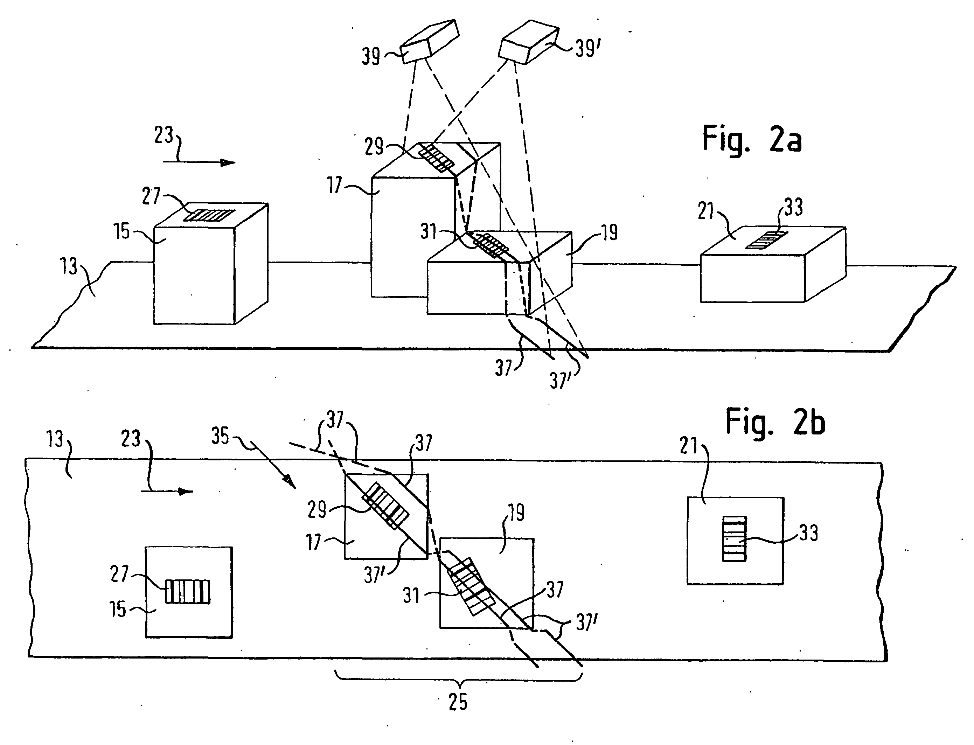

Dieses Problem kann bei der Erfindung auf vorteilhafte Weise umgangen werden. Fig. 2a und 2b zeigen in einer Weiterbildung der Ausführungsform gemäß Fig. 1a und 1b, dass die Abtasteinrichtungen 39, 39' zu diesem Zweck geneigt zueinander verlaufende Abtaststrahlengänge besitzen. Hierfür sind die Abtasteinrichtungen 39, 39' entlang der Förderrichtung 23 beabstandet voneinander angeordnet, und sie sind bezüglich der Vertikalen um einen Neigungswinkel von jeweils 10° in bzw. entgegen der Förderrichtung 23 geneigt. Dies bewirkt, dass es keine gemeinsamen Abschattungsbereiche der beiden Abtasteinrichtungen 39, 39' gibt und deshalb stets auch Codes auf niedrigen Paketen 19 gelesen werden können.

Die Draufsicht gemäß Fig. 2b zeigt, dass aufgrund der jeweiligen Neigung der Abtasteinrichtungen 39, 39' und der unterschiedlichen Höhe der Pakete 17, 19 und des Förderbands 13 die Abtastlinien 37, 37' nur bereichsweise einen geradlinigen Verlauf besitzen.

Die anhand Fig. 2a und 2b erläuterte Anordnung der Abtasteinrichtungen 39, 39' mit entgegensetzten Neigungswinkeln ist auch dazu geeignet, Totalreflexionen oder sonstige Reflexionseffekte zu vermeiden, die beispielsweise auftreten können, falls die Oberfläche der Pakete 15, 17, 19, 21 mit einer reflektierenden Folie versehen ist, und die bei rein orthogonalem Abtasten zu Fehllesungen führen können.

### Bezugszeichenliste

- 11: Barcodescanner
- 13: Förderband
- 15, 17, 19, 21: Paket
- 23: Förderrichtung
- 25: Lesebereich
- 27, 29, 31, 33: Code
- 35: Abtastrichtung
- 37, 37': Abtastlinie
- 39: erste Abtasteinrichtung
- 39': zweite Abtasteinrichtung
- 41: weitere Abtastrichtung
- 43, 43': weitere Abtastlinie
- 45, 47, 49: Abschattungsbereich
- 51, 53: effektiver Leseabschnitt

## Patentansprüche

1. Optoelektronischer Codeleser zum Einlesen von Codes (27, 29, 31, 33) , die sich innerhalb eines Lesebereichs (25) relativ zu dem Codeleser bewegen, durch Abtasten des Lesebereichs zumindest entlang einer Abtastrichtung (35),
wobei zum Einlesen von Codes (29, 31), die entlang der Abtastrichtung (35) in unterschiedlichen Abständen zu dem Codeleser angeordnet sind, wenigstens eine erste Abtasteinrichtung (39) und eine zweite Abtasteinrichtung (39') vorgesehen sind, die zum Abtasten entlang der Abtastrichtung (35) in unterschiedlichen Fokuslagen steuerbar sind,
**dadurch gekennzeichnet,**
**dass** der Codeleser einen Bilderfassungssensor oder Objekterfassungssensor aufweist zur Erfassung der Anzahl der Codes (29, 31) im Lesebereich, zur Erfassung des gegenseitigen Abstands der Codes im Lesebereich und/oder zur Erfassung der Relativanordnung der Codes bezüglich der Abtastrichtung, und
**dass** die Abtasteinrichtungen (39, 39') derart steuerbar sind, dass
- bei Vorhandensein einer vorbestimmten Mindestanzahl von Codes (29, 31) im Lesebereich (25), bei Unterschreiten eines vorbestimmten gegenseitigen Mindestabstands der Codes im Lesebereich und/oder bei Anordnung mehrerer Codes entlang der Abtastrichtung nebeneinander die Fokuslagen der ersten Abtasteinrichtung (39) und der zweiten Abtasteinrichtung (39') auf verschiedene Codes (29, 31) einstellbar sind, und
- ansonsten die erste Abtasteinrichtung (39) und die zweite Abtasteinrichtung (39') auf eine gemeinsame Fokuslage einstellbar sind.

2. Codeleser nach Anspruch 1,
**dadurch gekennzeichnet,**
**dass** der Codeleser wenigstens eine Abstandsmesseinrichtung zur Bestimmung des Abstands zwischen einem Code (29, 31) und dem Codeleser aufweist.

3. Codeleser nach einem der vorhergehenden Ansprüche,
**dadurch gekennzeichnet,**
**dass** die Abtasteinrichtungen als Barcodescanner (39, 39') , Zeilenkamera oder Matrixkamera ausgebildet ist.

4. Codeleser nach einem der vorhergehenden Ansprüche,
**dadurch gekennzeichnet,**
**dass** zur Vermeidung einer geometrischen Abschattung eines Abtaststrahls einer Abtasteinrichtung (39, 39') durch ein im Lesebereich befindliches Objekt (17, 19) oder zur Vermeidung von Reflexionseffekten an dem abzutastenden Code
- die erste Abtasteinrichtung (39) und die zweite Abtasteinrichtung (39') geneigt zueinander verlaufende Abtaststrahlengänge aufweisen und/oder
- die erste Abtasteinrichtung (39) und die zweite Abtasteinrichtung (39') beabstandet voneinander angeordnet sind.

5. Codeleser nach Anspruch 4,
**dadurch gekennzeichnet,**
**dass** der Neigungswinkel des Abtaststrahlengangs einer Abtasteinrichtung (39, 39') bezüglich der Orthogonalen zu der Lesefläche zwischen 2° und 20°, insbesondere ca. 10° beträgt, und/oder
**dass** der Abtaststrahlengang der ersten Abtasteinrichtung (39) in Richtung (23) der Relativbewegung von Codeleser und Codes geneigt und der Abtaststrahlengang der zweiten Abtasteinrichtung (39') entgegen dieser Richtung (23) geneigt verläuft und/oder
**dass** die erste Abtasteinrichtung (39) und die zweite Abtasteinrichtung (39') bezüglich der Richtung (23) der Relativbewegung von Codeleser und Codes beabstandet voneinander angeordnet sind.

6. Codeleser nach einem der vorhergehenden Ansprüche,
**dadurch gekennzeichnet,**
**dass** die erste Abtasteinrichtung (39) und die zweite Abtasteinrichtung (39') zum Abtasten des Lesebereichs (25) entlang parallel benachbarter Abtastlinien (37, 37'; 43, 43') ausgebildet sind, oder
**dass** die erste Abtasteinrichtung und die zweite Abtasteinrichtung zum Abtasten des Lesebereichs entlang übereinstimmender Abtastlinien ausgebildet sind, oder
**dass** die erste Abtasteinrichtung und die zweite Abtasteinrichtung zum Abtasten des Lesebereichs entlang von Abtastlinien ausgebildet sind, die in einem spitzen Winkel schräg zueinander verlaufen.

7. Codeleser nach einem der vorhergehenden Ansprüche,
**dadurch gekennzeichnet,**
**dass** die Abtastrichtung (35) bezüglich der Richtung (23) der Relativbewegung von Codeleser und Codes schräg verläuft.

8. Codeleser nach einem der vorhergehenden Ansprüche,
**dadurch gekennzeichnet,**
**dass** der Codeleser zusätzlich zum Abtasten des Lesebereichs (25) wenigstens entlang einer weiteren Abtastrichtung (41) ausgebildet ist.

9. Codeleser nach Anspruch 8,
**dadurch gekennzeichnet,**
**dass** die Abtastrichtung (35) und die weitere Abtastrichtung (41) diagonal oder senkrecht zueinander verlaufen, und/oder
der Codeleser auch bezüglich der weiteren Abtastrichtung (41) zum Abtasten in unterschiedlichen Fokuslagen vorgesehen ist,
und/ oder
**dass** die erste Abtasteinrichtung (39) und die zweite Abtasteinrichtung (39') auch für das Abtasten des Lesebereichs (25) entlang der weiteren Abtastrichtung (41) vorgesehen sind oder dass für das Abtasten des Lesebereichs (25) entlang der weiteren Abtastrichtung (41) wenigstens eine zusätzliche Abtasteinrichtung vorgesehen ist.

10. Verfahren zum Einlesen von Codes (27, 29, 31, 33), die sich innerhalb eines Lesebereichs (25) relativ zu einem Codeleser bewegen, durch Abtasten des Lesebereichs zumindest entlang einer Abtastrichtung (35),
wobei zum Einlesen von Codes (29, 31), die entlang der Abtastrichtung (35) in unterschiedlichen Abständen zu dem Codeleser angeordnet sind, wenigstens eine erste Abtasteinrichtung (39) und eine zweite Abtasteinrichtung (39') den Lesebereich entlang der Abtastrichtung (35) in unterschiedlichen Fokuslagen abtasten,
**dadurch gekennzeichnet,**
**dass** die Anzahl der Codes (29, 31) im Lesebereich, der gegenseitige Abstand der Codes im Lesebereich und/oder die Relativanordnung der Codes bezüglich der Abtastrichtung erfasst werden, und
**dass** die Abtasteinrichtungen (39, 39') derart gesteuert werden, dass
- bei Vorhandensein einer vorbestimmten Mindestanzahl von Codes (29, 31) im Lesebereich (25), bei Unterschreiten eines vorbestimmten gegenseitigen Mindestabstands der Codes im Lesebereich und/oder bei Anordnung mehrerer Codes entlang der Abtastrichtung nebeneinander die Fokuslagen der ersten Abtasteinrichtung (39) und der zweiten Abtasteinrichtung (39') auf verschiedene Codes (29, 31) eingestellt werden, und
- ansonsten die erste Abtasteinrichtung (39) und die zweite Abtasteinrichtung (39') auf eine gemeinsame Fokuslage eingestellt werden.

11. Verfahren nach Anspruch 10,
**dadurch gekennzeichnet,**
**dass** zur Vermeidung einer geometrischen Abschattung eines Abtaststrahls einer Abtasteinrichtung (39, 39') durch ein im Lesebereich (25) befindliches Objekt (17, 19) oder zur Vermeidung von Reflexionseffekten an dem abzutastenden Code die erste Abtasteinrichtung (39) und die zweite Abtasteinrichtung (39') den Lesebereich (25) mit geneigt zueinander verlaufenden Abtaststrahlen abtasten, und/oder
**dass** die erste Abtasteinrichtung (39) und die zweite Abtasteinrichtung (39') den Lesebereich (25) entlang parallel benachbarter Abtastlinien (37, 37'; 43, 43'), entlang übereinstimmender Abtastlinien oder entlang von Abtastlinien abtasten, die in einem spitzen Winkel schräg zueinander verlaufen.

12. Verfahren nach einem der Ansprüche 10 oder 11,
**dadurch gekennzeichnet,**
**dass** zusätzlich der Lesebereich (25) wenigstens entlang einer weiteren Abtastrichtung (41) abgetastet wird.

13. Verfahren nach Anspruch 12,
**dadurch gekennzeichnet,**
**dass** die Abtastrichtung (35) und die weitere Abtastrichtung (41) diagonal oder senkrecht zueinander verlaufen, und/oder
**dass** der Codeleser auch bezüglich der weiteren Abtastrichtung (41) zum Abtasten in unterschiedlichen Fokuslagen gesteuert wird.

## Claims

1. An optoelectronic code reader for the reading in of codes (27, 29, 31, 33), which move relative to the code reader within a reading zone (25), by scanning the reading zone at least along one scanning direction (35),
wherein, for the reading in of codes (29, 31) which are arranged along the scanning direction (35) at different distances to the code reader, at least one first scanning device (39) and one second scanning device (39') are provided which can be controlled for the scanning along the scanning direction (35) at different focal positions,
**characterized in that** the code reader has an image detection sensor or an object detection sensor for the detection of the number of codes (29, 31) in the reading zone, for the detection of the mutual spacing of the codes in the reading zone and/or for the detection of the relative arrangement of the codes with respect to the scanning direction; and
**in that** the scanning devices (39, 39') can be controlled such that
- on the presence of a pre-determined minimum number of codes (29, 31) in the reading zone (25), when a pre-determined minimum mutual spacing of the codes in the reading zone is not achieved and/or, when a plurality of codes are arranged next to one another along the scanning direction, the focal positions of the first scanning device (39) and of the second scanning device (39') can be focused on different codes (29, 31); and
- otherwise, the first scanning device (39) and the second scanning device (39') can be focused on a common focal position.

2. A code reader in accordance with claim 1, **characterized in that** the code reader has at least one distance measurement device for the determination of the distance between a code (29, 31) and the code reader.

3. A code reader in accordance with any one of the preceding claims, **characterized in that** the scanning device is formed as a barcode scanner (39, 39'), as a line scan camera or a matrix camera.

4. A code reader in accordance with any one of the preceding claims, **characterized in that**, for the avoidance of a geometrical shadowing of a scanning device (39, 39') by an object (17, 19) located in the reading zone, or for the avoidance of reflection effects at the code to be scanned,
- the first scanning device (39) and the second scanning device (39') have scan beam paths extending inclined to one another; and/or
- the first scanning device (39) and the second scanning device (39') are arranged spaced apart from one another.

5. A code reader in accordance with claim 4, **characterized**
**in that** the angle of inclination of the scan beam path of a scanning device (39, 39') with respect to the orthogonal on the reading surface amounts to between 2° and 20°, in particular to approximately 10°; and or
**in that** the scan beam path of the first scanning device (39) extends inclined in the direction (23) of the relative movement of the code reader and of the codes and the scan beam path of the second scanning device (39') extends inclined opposite to this direction (23); and/or
**in that** the first scanning device (39) and the second scanning device (39') are arranged spaced apart from one another with respect to the direction (23) of the relative movement of the code reader and of the codes.

6. A code reader in accordance with any one of the preceding claims, **characterized in that** the first scanning unit (39) and the second scanning unit (39') are formed for the scanning of the reading zone (25) along scan lines (37, 37'; 43, 43') adjacent in parallel; or
**in that** the first scanning device and the second scanning device are formed for the scanning of the reading zone along coinciding scan lines; or
**in that** the first scanning device and the second scanning device are formed for the scanning of the reading zone along scan lines which extend inclined to one another at an acute angle.

7. A code reader in accordance with any one of the preceding claims, **characterized in that** the scanning device (35) extends diagonally with respect to the direction (23) of the relative movement of the code reader and of the codes.

8. A code reader in accordance with any one of the preceding claims, **characterized in that** the code reader is additionally formed for the scanning of the reading zone (25) at least along one further scanning direction (41).

9. A code reader in accordance with claim 8, **characterized in that** the scanning direction (35) and the further scanning direction (41) extend diagonally or perpendicular to one another; and/or
**in that** the code reader is also provided for scanning in different focal positions with respect to the further scanning direction (41); and/or
**in that** the first scanning device (39) and the second scanning device (39') are also provided for the scanning of the reading zone (25) along the further scanning direction (41); or
**in that** at least one additional scanning device is provided for the scanning of the reading zone (25) along the further scanning direction (41).

10. A method for the reading in of codes (27, 29, 31, 33), which move within a reading zone (25) relative to a code reader, by scanning the reading zone at least along one scanning direction (35),
wherein, for the reading in of codes (29, 31) which are arranged along the scanning direction (35) at different distances to the code reader, at least one first scanning device (39) and one second scanning device (39') scan the reading zone at different focal positions along the scanning direction (35),
**characterized in that** the number of codes (29, 31) in the reading zone, the mutual spacing of the codes in the reading zone and/or the relative arrangement of the codes with respect to the scanning direction are detected; and
**in that** the scanning devices (39, 39') are controlled such that
- on the presence of a pre-determined minimum number of codes (29, 31) in the reading zone (25), when a pre-determined minimum mutual spacing of the codes in the reading zone is not achieved and/or when a plurality of codes are arranged next to one another along the scanning direction, the focal positions of the first scanning device (39) and of the second scanning device (39') are focused on different codes (29, 31); and
- otherwise, the first scanning device (39) and the second scanning device (39') are focused on a common focal position.

11. A method in accordance with claim 10, **characterized in that**, for the avoidance of a geometrical shadowing of a scan beam of a scanning device (39, 39') by an object (17, 19) located in the reading zone (25), or for the avoidance of reflection effects at the code to be scanned, the first scanning device (39) and the second scanning device (39') scan the reading zone (25) with scan beams extending inclined to one another; and/or
**in that** the first scanning device (39) and the second scanning device (39') scan the reading zone (25) along scan lines (37, 37'; 43, 43') adjacent in parallel, along coinciding scan lines or along scan lines extending obliquely to one another at an acute angle.

12. A method in accordance with any one of claims 10 or 11, **characterized in that** the reading zone (25) is additionally scanned at least along one further scanning direction (41).

13. A method in accordance with claim 12, **characterized in that** the scanning direction (35) and the further scanning direction (41) extend diagonally or perpendicular to one another; and or
**in that** the code reader is preferably also controlled with respect to the further scanning direction (41) for scanning at different focal positions.

## Revendications

1. Lecteur optoélectronique de code servant à lire des codes (27, 29, 31, 33) qui se déplacent à l'intérieur d'une zone de lecture (25) par rapport au lecteur de code, en effectuant un balayage de la zone de lecture selon au moins une direction de balayage (35),
au moins un premier dispositif de balayage (39) et un deuxième dispositif de balayage (39') qui peuvent être commandés pour effectuer un balayage selon la direction de balayage (35) dans différentes positions de foyer étant prévus pour lire des codes (29, 31) qui sont disposés, dans la direction de balayage (35), à différentes distances par rapport au lecteur de code,
**caractérisé en ce que**
le lecteur de code comporte un capteur de détection d'image ou un capteur de détection d'objet servant à détecter le nombre de codes (29, 31) se trouvant dans la zone de lecture, à détecter l'écart mutuel des codes situés dans la zone de lecture et/ou à détecter la disposition relative des codes par rapport à la direction de balayage, et
les dispositifs de balayage (39, 39') peuvent être commandés de telle manière que :
- les positions de foyer du premier dispositif de balayage (39) et du deuxième dispositif de balayage (39') puissent être réglées sur des codes différents (29, 31) en cas de présence d'un nombre minimal prédéfini de codes (29, 31) dans la zone de lecture (25), en cas de sous-dépassement d'une distance minimale mutuelle prédéfinie entre les codes situés dans la zone de lecture et/ou en cas de disposition côte à côte de plusieurs codes dans la direction de balayage, et de telle manière que,
- sinon, le premier dispositif de balayage (39) et le deuxième dispositif de balayage (39') puissent être réglés sur une position de foyer commune.

2. Lecteur de code selon la revendication 1,
**caractérisé en ce que**
le lecteur de code comporte au moins un dispositif de mesure de distance servant à déterminer la distance entre un code (29, 31) et le lecteur de code.

3. Lecteur de code selon l'une des revendications précédentes,
**caractérisé en ce que**
les dispositifs de balayage sont réalisés sous forme de scanneur de code à barres (39, 39'), de caméra à balayage horizontal ou de caméra matricielle.

4. Lecteur de code selon l'une des revendications précédentes,
**caractérisé en ce que**,
pour éviter un masquage géométrique d'un faisceau de balayage d'un dispositif de balayage (39, 39') par un objet (17, 19) présent dans la zone de lecture ou pour éviter des phénomènes de réflexion au niveau du code à balayer :
- le premier dispositif de balayage (39) et le deuxième dispositif de balayage (39') présentent des trajets de faisceau de balayage qui s'étendent obliquement l'un par rapport à l'autre, et/ou
- le premier dispositif de balayage (39) et le deuxième dispositif de balayage (39') sont disposés à distance l'un de l'autre.

5. Lecteur de code selon la revendication 4,
**caractérisé en ce que**
l'angle d'inclinaison du trajet du faisceau de balayage d'un dispositif de balayage (39, 39') est situé, par rapport à l'orthogonale à la surface de lecture, entre 2° et 20°, notamment à peu près 10°, et/ou
le trajet du faisceau de balayage du premier dispositif de balayage (39) s'étend obliquement dans la direction (23) du déplacement relatif entre le lecteur de code et les codes et le trajet du faisceau de balayage du deuxième dispositif de balayage (39') s'étend obliquement à l'encontre de cette direction (23), et/ou
le premier dispositif de balayage (39) et le deuxième dispositif de balayage (39') sont disposés à distance l'un de l'autre par rapport à la direction (23) du déplacement relatif entre le lecteur de code et les codes.

6. Lecteur de code selon l'une des revendications précédentes,
**caractérisé en ce que**
le premier dispositif de balayage (39) et le deuxième dispositif de balayage (39') servant à balayer la zone de lecture (25) sont réalisés selon des lignes de balayage parallèlement voisines (37, 37' ; 43, 43'), ou
le premier dispositif de balayage et le deuxième dispositif de balayage servant à balayer la zone de lecture sont réalisés selon des lignes de balayage concordantes, ou
le premier dispositif de balayage et le deuxième dispositif de balayage servant à balayer la zone de lecture sont réalisés selon des lignes de balayage qui s'étendent obliquement l'une par rapport à l'autre en formant un angle aigu.

7. Lecteur de code selon l'une des revendications précédentes,
**caractérisé en ce que**
la direction de balayage (35) s'étend obliquement par rapport à la direction (23) du déplacement relatif entre le lecteur de code et les codes.

8. Lecteur de code selon l'une des revendications précédentes,
**caractérisé en ce que**
le lecteur de code est, de plus, réalisé pour balayer la zone de lecture (25) selon au moins une autre direction de balayage (41).

9. Lecteur de code selon la revendication 8,
**caractérisé en ce que**
la direction de balayage (35) et l'autre direction de balayage (41) s'étendent en diagonale ou perpendiculairement l'une à l'autre, et/ou
le lecteur de code est prévu pour balayer dans différentes positions de foyer pour ce qui est de l'autre direction de balayage (41) aussi, et/ou
le premier dispositif de balayage (39) et le deuxième dispositif de balayage (39') sont prévus également pour balayer la zone de lecture (25) selon l'autre direction de balayage (41), ou au moins un dispositif de balayage supplémentaire est prévu pour balayer la zone de lecture (25) selon l'autre direction de balayage (41).

10. Procédé servant à lire des codes (27, 29, 31, 33) qui se déplacent à l'intérieur d'une zone de lecture (25) par rapport à un lecteur de code, en effectuant un balayage de la zone de lecture selon au moins une direction de balayage (35),
au moins un premier dispositif de balayage (39) et un deuxième dispositif de balayage (39') balayant la zone de lecture selon la direction de balayage (35) dans différentes positions de foyer pour lire des codes (29, 31) qui sont disposés dans la direction de balayage (35) à des distances différentes par rapport au lecteur de code,
**caractérisé en ce que**
le nombre de codes (29, 31) se trouvant dans la zone de lecture, la distance mutuelle entre les codes situés dans la zone de lecture et/ou la disposition relative des codes par rapport à la direction de balayage sont détectés, et
les dispositifs de balayage (39, 39') sont commandés de telle manière que
- les positions de foyer du premier dispositif de balayage (39) et du deuxième dispositif de balayage (39') soient réglées sur des codes différents (29, 31) en cas de présence d'un nombre minimal prédéfini de codes (29, 31) dans la zone de lecture (25), en cas de sous-dépassement d'une distance minimale mutuelle prédéfinie entre les codes situés dans la zone de lecture et/ou en cas de disposition côte à côte de plusieurs codes dans la direction de balayage, et de telle manière que,
- sinon, le premier dispositif de balayage (39) et le deuxième dispositif de balayage (39') soient réglés sur une position de foyer commune.

11. Procédé selon la revendication 10,
**caractérisé en ce que**,
pour éviter un masquage géométrique d'un faisceau de balayage d'un dispositif de balayage (39, 39') par un objet (17, 19) présent dans la zone de lecture (25) ou pour éviter des phénomènes de réflexion au niveau du code à balayer, le premier dispositif de balayage (39) et le deuxième dispositif de balayage (39') balaient la zone de lecture (25) avec des faisceaux de balayage qui s'étendent obliquement l'un par rapport à l'autre, et/ou
le premier dispositif de balayage (39) et le deuxième dispositif de balayage (39') balaient la zone de lecture (25) selon des lignes de balayage parallèlement voisines (37, 37' ; 43, 43'), selon des lignes de balayage concordantes ou selon des lignes de balayage qui s'étendent obliquement l'une par rapport à l'autre en formant un angle aigu.

12. Procédé selon l'une des revendications 10 et 11,
**caractérisé en ce que**,
de plus, la zone de lecture (25) est balayée selon au moins une autre direction de balayage (41).

13. Procédé selon la revendication 12,
**caractérisé en ce que**
la direction de balayage (35) et l'autre direction de balayage (41) s'étendent en diagonale ou perpendiculairement l'une à l'autre, et/ou
le lecteur de code est également commandé, en ce qui concerne l'autre direction de balayage (41), pour balayer dans différentes positions de foyer.
